# EUROPÄISCHE PATENTSCHRIFT

(11) **EP 2 241 786 B1**
(45) Veröffentlichungstag und Bekanntmachung des Hinweises auf die Patenterteilung: **29.02.2012**
(21) Anmeldenummer: 10155601.7
(22) Anmeldetag: 05.03.2010
(51) Int. Cl.: F16H 47/04, F16D 3/18, F16H 57/00, F04B 1/24, F16H 39/08

(54) **Leistungsverzweigungsgetriebe mit einem hydrostatischen und einem mechanischen Leistungszweig**
Power split drive with a hydrostatic and a mechanical power split
Engrenage d'embrayage à division de puissance doté d'un embrayage hydrostatique et mécanique

(30) Priorität: 15.04.2009 DE 102009002370
(43) Veröffentlichungstag der Anmeldung: 20.10.2010
(73) Patentinhaber: ZF Friedrichshafen AG, 88038 Friedrichshafen (DE)
(72) Erfinder: Brehmer, Udo, 78464, Konstanz (DE); Rehtanz, Roland, 88069, Tettnang (DE)

(56) Entgegenhaltungen:
- EP-B1- 1 091 837
- EP-B1- 1 802 896
- DE-A1- 10 322 233
- DE-A1-102007 033 008
- FR-A1- 2 327 422

## Beschreibung

Die Erfindung betrifft ein Leistungsverzweigungsgetriebe mit einem hydrostatischen und einem mechanischen Leistungszweig gemäß der im Oberbegriff des Patentanspruches 1 näher definierten Art.

Ein Leistungsverzweigungsgetriebe mit einem mechanischen und einem hydraulischen Leistungszweig ist aus der DE 103 22 233 A1 bekannt. Der hydraulische bzw. hydrostatische Leistungszweig ist jeweils über eine Welle mit dem mechanischen Leistungszweig verbunden. Um während des Betriebes des Leistungsverzweigungsgetriebes im Bereich des hydrostatischen Leistungszweiges auftretende Schwingungen in wesentlich verringertem Umfang in das Getriebegehäuse und in den mechanischen Leistungszweig einzuleiten, sind im Bereich der Verbindungsstelle eines hydraulischen Motors mit einer hydraulischen Pumpe des hydrostatischen Leistungszweiges Dämpfungselemente vorgesehen, über welche der Motor und die Pumpe gedämpft im Getriebegehäuse befestigt sind. Über die Dämpfungselemente sind der hydraulische Motor und die hydraulische Pumpe im elastischen Bereich der Dämpfungselemente auslenkbar.

Ein durch die Auslenkung zwischen dem hydrostatischen Leistungszweig und dem mechanischen Leistungszweig auftretender Achsversatz wird über eine den hydrostatischen Leistungszweig mit dem mechanischen Leistungszweig verbindende Welle ausgeglichen, wobei die Welle im Verbindungsbereich mit dem hydrostatischen Leistungszweig und auch im Verbindungsbereich mit dem mechanischen Leistungszweig jeweils eine ballige Verzahnung aufweist.

Nachteilig dabei ist jedoch, dass die zum Ausgleich des Achsversatzes zwischen dem mechanischen Leistungszweig und dem hydrostatischen Leistungszweig des Leistungsverzweigungsgetriebes erforderliche Länge der Welle einen großen axialen Bauraumbedarf des Leistungsverzweigungsgetriebes verursacht.

Aus der DE 10 2006 052 410 A1 ist eine Steckwelle bekannt, welche ein Antriebszahnrad mit einer Nockenwelle einer Brennkraftmaschine drehfest verbindet. Die Steckwelle ist jeweils über eine doppelt-ballige Bogenverzahnung im Antriebszahnrad und in der Nockenwelle gelagert, wodurch ein großer Versatz des Antriebszahnrads zur Nockenwelle mit einer kurzen Steckwelle ausgleichbar ist.

Die DE 10 2006 025 347 B3 beschreibt ein Hydromodul mit zwei integrierten Schrägscheiben- oder Schrägachsentriebwerken für hydrostatischmechanische Leistungsverzweigungsgetriebe, wobei das Hydromodul im Bereich von Triebwellen, die jeweils in einem Verbindungsbereich mit einem mechanischen Leistungszweig eines Leistungsverzweigungsgetriebes mit Außenverzahnungen ausgebildet sind, mit dem mechanischen Leistungszweig des Leistungsverzweigungsgetriebes verbindbar ist.

Über die Außenverzahnungen der Triebwellen sind Auslenkungen im Bereich eines hydraulischen Motors bzw. einer hydraulischen Pumpe des Hydromoduls nicht in demselben Umfang wie bei den beiden vorbeschriebenen und aus dem Stand der Technik bekannten Lösungen ausgleichbar. Selbst eine der aus der DE 103 22 233 A1 oder der DE 10 2006 052 410 A1 entsprechende Anbindung des Hydromoduls an den mechanischen Leistungszweig eines Leistungsverzweigungsgetriebes führt nicht zu einem gewünschten geringen axialen Bauraumbedarf des Leistungsverzweiungsgetriebes.

Die DE 102007 033 008 zeigt die Merkmale des Oberbegriffes des Anspruches 1.

Der vorliegenden Erfindung liegt daher die Aufgabe zugrunde, ein zumindest in axialer Richtung bauraumgünstiges Leistungsverzweigungsgetriebe zur Verfügung zu stellen, bei dem ein hydrostatischer Leistungszweig schwingungsgedämpft mit einem mechanischen Leistungszweig verbunden ist.

Erfindungsgemäß wird diese Aufgabe mit einem Leistungsverzweigungsgetriebe mit den Merkmalen des Patentanspruches 1 gelöst.

Bei dem erfindungsgemäßen Leistungsverzweigungsgetriebe sind ein hydrostatischer Leistungszweig und ein mechanischer Leistungszweig über eine Verbindungseinrichtung verbunden. Die Verbindungseinrichtung dämpft eine Übertragung von Schwingungen zwischen dem hydrostatischen Leistungszweig und dem mechanischen Leistungszweig zumindest teilweise. Der Leistungsfluss zwischen dem hydrostatischen Leistungszweig und dem mechanischen Leistungszweig ist jeweils über eine einen Achsversatz zwischen einer Hydrostatwelle des hydrostatischen Leistungszweiges und einer Welle des mechanischen Leistungszweiges ausgleichenden Verbindungswelle führbar. Die Verbindungswelle greift mit einem ersten Zahnprofil in ein Zahnprofil der Hydrostatwelle ein und ist über ein zweites Zahnprofil mit einem Zahnprofil der Welle des mechanischen Leistungszweiges wirkverbunden.

Um das erfindungsgemäße Leistungsverzweigungsgetriebe in axialer Richtung mit einem geringen Bauraumbedarf ausführen zu können, ist die Verbindungswelle als Hohlwelle ausgebildet und eine die Hydrostatwelle federnd vorspannende Federeinrichtung ist zumindest teilweise in der Verbindungswelle angeordnet, wobei die äußeren Abmessungen des Leistungsverzweigungsgetriebes in axialer Richtung im Vergleich zu aus dem Stand der Technik bekannten Leistungsverzweigungsgetrieben zusätzlich dadurch optimiert sind, dass die Zahnprofile der Verbindungswelle als Bogenaußenverzahnungen ausgebildet sind, die jeweils in Innenverzahnungen der Hydrostatwelle und der Welle des mechanischen Leistungszweiges eingreifen.

Letztgenannte Ausführung der Verbindungswelle bietet auf einfache und kostengünstige Art und-Weise die Möglichkeit, selbst größere Achsversätze zwischen der Hydrostatwelle und der Welle des mechanischen Leistungszweiges mit einer kurzen Verbindungswelle in gewünschtem Umfang ausgleichen zu können.

Die Anordnung der die Hydrostatwelle federnd vorspannenden Federeinrichtung in der Verbindungswelle eröffnet wiederum die Möglichkeit, die Verbindungswelle in einem inneren Bereich der Hydrostatwelle anzuordnen, der bei aus dem Stand der Technik bekannten Leistungsverzweigungsgetrieben bzw. Hydromodulen bisher nur für die Anordnung der Federeinrichtung vorgesehen ist. Durch die erfindungsgemäße geschachtelte Anordnung der Hydrostatwelle, der Verbindungswelle und der Federeinrichtung sind im Vergleich zu bekannten Leistungsverzweigungsgetrieben, bei welchen ein Verbindungsbereich zwischen einer Verbindungswelle und einer Hydrostatwelle und die Federeinrichtung in axialer Richtung nebeneinander angeordnet sind, die äußeren Abmessungen des Leistungsverzweigungsgetriebes nach der Erfindung in axialer Richtung geringer und weitergehend optimiert.

Bei einer weiteren durch einen geringen axialen Bauraumbedarf gekennzeichneten Ausführungsform des erfindungsgemäßen Leistungsverzweigungsgetriebes ist die Verbindungswelle wenigstens bereichsweise radial innerhalb einer Lagereinrichtung der Hydrostatwelle angeordnet.

Um eine Schmierölversorgung des Leistungsverzweigungsgetriebes gewährleisten zu können, ist zwischen der Hydrostatwelle und der Welle des mechanischen Leistungszweiges bei einer weiteren vorteilhaften Ausführungsform des Leistungsverzweigungsgetriebes eine Dichteinrichtung angeordnet, wobei die Dichteinrichtung zur Gewährleistung der Dichtwirkung bei Achsversätzen zwischen der Hydrostatwelle und der Welle des mechanischen Leistungszweiges vorzugsweise als Elastomerdichtung ausgeführt ist.

Eine einen geringen axialen Bauraumbedarf aufweisende Weiterbildung des erfindungsgemäßen Leistungsverzweigungsgetriebes ist durch einen Überlappungsbereich zwischen der Hydrostatwelle und der Welle des mechanischen Leistungszweiges gekennzeichnet, in dem die Dichteinrichtung angeordnet ist.

Die die Hydrostatwelle federnd vorspannende Federeinrichtung umfasst bei einer konstruktiv einfachen und kostengünstigen Ausführungsform des erfindungsgemäßen Leistungsverzweigungsgetriebes eine Federhülse und zumindest ein darin angeordnetes Federelement, wobei das Federelement einenends an der Federhülsen und anderenends an einem in der Federhülse längsbeweglich angeordneten Kolbenelement angeschultert ist.

In Einbaulage ist die Federhülse bei einer weiteren vorteilhaften sowie einfach herzustellenden und zu montierenden Ausführungsform des Leistungsverzweigungsgetriebes gegen einen Bund der Hydrostatwelle gedrückt.

Das Kolbenelement ist zur federnden Vorspannung der Hydrostatwelle bei einer vorteilhaften Weiterbildung des Leistungsverzweigungsgetriebes über das Federelement gegen ein Gehäuse des hydrostatischen Leistungszweiges gedrückt.

Um eine Schmierölversorgung des Leistungsverzweigungsgetriebes auf konstruktiv einfache Art und Weise gewährleisten zu können, sind das Kolbenelement und/oder die Federhülse bei weiteren vorteilhaften Ausführungsformen des Leistungsverzweigungsgetriebes mit einer Durchgangsbohrung ausgebildet.

Eine Schmierölversorgung der Verzahnungen zwischen der Verbindungswelle und der Hydrostatwelle sowie zwischen der Verbindungswelle und der Welle des mechanischen Leistungszweiges ist bei einer vorteilhaften Weiterbildung des Leistungsverzweigungsgetriebes durch zumindest eine radiale Ölbohrung zwischen den Zahnprofilen der Verbindungswelle mit geringem Fertigungsaufwand gewährleistet.

Eine durch einen geringen Montageaufwand gekennzeichnete Ausführungsform des Leistungsverzweigungsgetriebes weist ein mehrteiliges Getriebegehäuse auf, wobei der hydrostatische Leistungszweig in einem ersten Gehäuseteil und der mechanische Leistungszweig in einem zweiten Gehäuseteil angeordnet sind.

Eine ebenfalls durch einen geringen Montageaufwand gekennzeichnete Weiterbildung des Leistungsverzweigungsgetriebes weist eine dem hydrostatischen Leistungszweig zwischen den Gehäuseteilen zugeordnete Grundplatte auf.

Bei einer durch eine hohe Schwingungsabkopplung gekennzeichneten Ausführungsform des Leistungsverzweigungsgetriebes umfasst die Verbindungseinrichtung Verschraubungen, über die die Gehäuseteile des Getriebegehäuses und die Grundplatte miteinander koppelbar sind. Im Bereich der Verschraubungen sind sich zwischen das erste Gehäuseteil und die Grundplatte sowie zwischen das zweite Gehäuseteil und die Grundplatte erstreckende Dämpfungselemente vorgesehen, mittels welchen im Betrieb im Bereich des hydrostatischen oder des mechanischen Leistungszweiges auftretende Schwingungen gedämpft in Richtung des mechanischen oder des hydrostatischen Leistungszweiges mit geringem konstruktivem Aufwand weitergeleitet werden.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine stark schematisierte Darstellung eines Leistungsverzwei- gungsgetriebes mit einem hydrostatischen Leistungszweig und einem mechanischen Leistungszweig;
- Fig. 2: eine dreidimensionale Ansicht eines hydrostatischen Leistungs- zweiges eines Leistungsverzweigungsgetriebes;
- Fig. 3: eine vergrößerte Einzelschnittansicht einer Verbindungseinrich- tung des Leistungsverzweigungsgetriebes entlang einer in Fig. 1 näher dargestellten Schnittlinie III-III;
- Fig. 4: eine dreidimensionale Schnittansicht des hydrostatischen Leistungszweiges gemäß Fig. 1; und
- Fig. 5: eine vergrößerte Schnittansicht eines in Fig. 4 näher gekennzeich- neten Bereiches V.

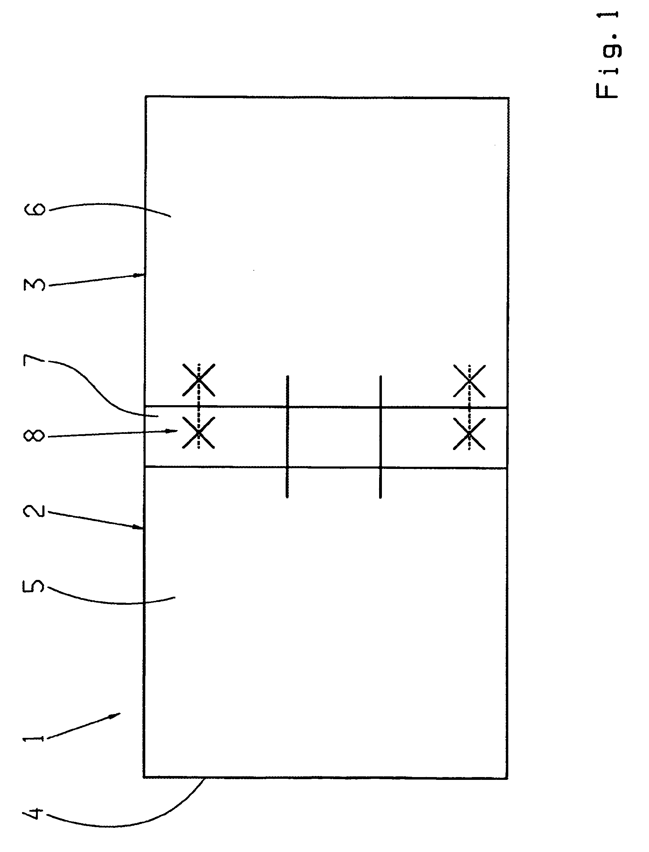

Fig. 1 zeigt eine stark schematisierte Darstellung eines Leistungsverzweigungsgetriebes 1 mit einem hydrostatischen Leistungszweig 2 und mit einem mechanischen Leistungszweig 3, die über eine Verbindungseinrichtung 8 miteinander verbunden sind. Ein Getriebegehäuse 4 des Leistungsverzweigungsgetriebes 1 ist mehrteilig ausgebildet, wobei der hydrostatische Leistungszweig 2 in einem ersten Gehäuseteil 5 und der mechanische Leistungszweig 3 in einem zweiten Gehäuseteil 6 angeordnet sind. Zwischen den Gehäuseteilen 5 und 6 ist eine dem hydrostatischen Leistungszweig 2 zugeordnete Grundplatte 7 vorgesehen.

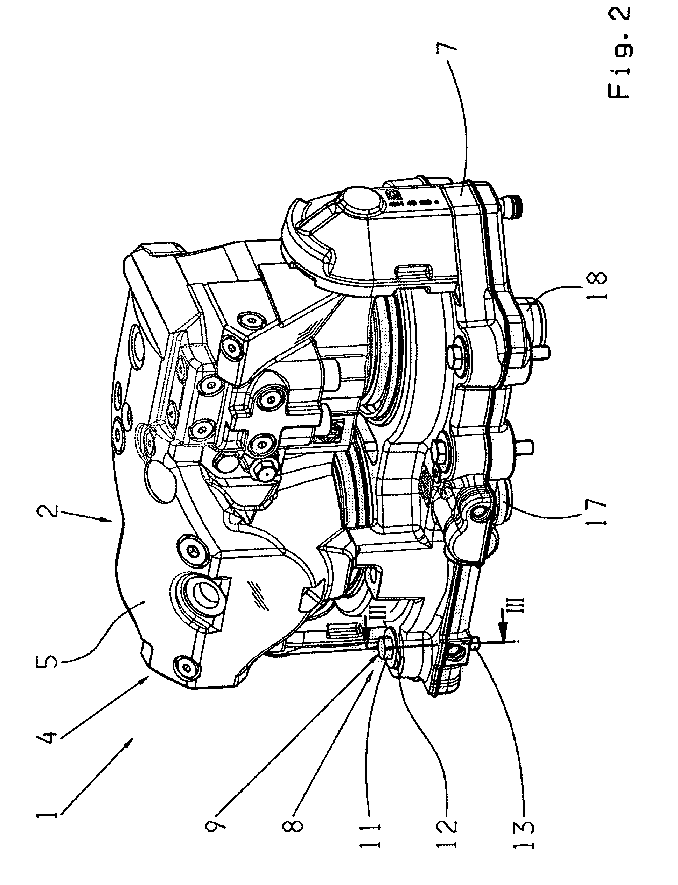

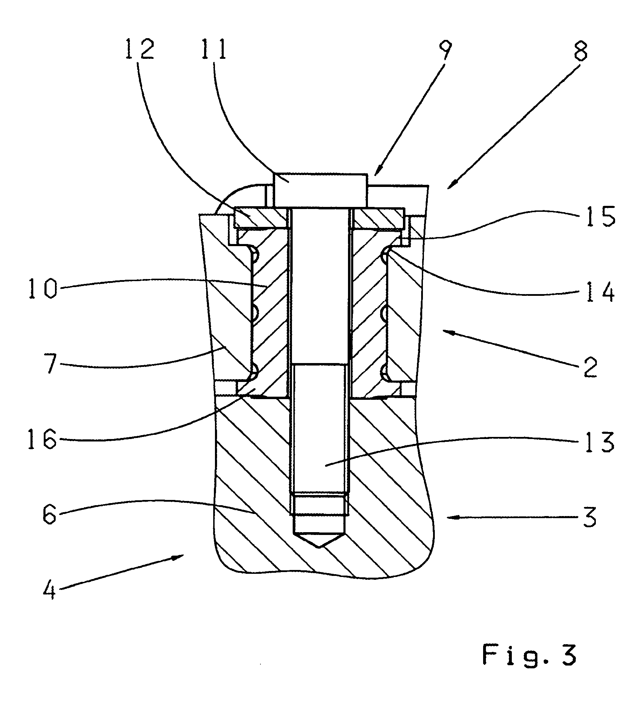

In Fig. 2 ist eine dreidimensionale Darstellung des ersten Gehäuseteiles 5 und der fest mit dem ersten Gehäuseteil 5 des hydrostatischen Leistungszweiges 2 verbundenen Grundplatte 7 dargestellt. Aus der Darstellung gemäß Fig. 2 in Verbindung mit der Schnittdarstellung gemäß Fig. 3, welche eine vergrößerte Einzelschnittansicht der Verbindungseinrichtung 8 entlang der in Fig. 2 näher dargestellten Schnittlinie III-III zeigt, geht hervor, dass das erste Gehäuseteil 5 und die Grundplatte 7 über Verschraubungen 9 der Verbindungseinrichtung 8 mit dem zweiten Gehäuseteil 6 koppelbar sind.

Um im Bereich der Verbindungseinrichtung 8 im Betrieb des Leistungsverzweigungsgetriebes 1 eine Übertragung von Schwingungen zwischen dem hydrostatischen Leistungszweig 2 und dem mechanischen Leistungszweig 3 zumindest teilweise zu dämpfen, sind im Bereich der Verschraubungen 9 sich zwischen das erste Gehäuseteil 5 und die Grundplatte 7 erstreckende Dämpfungselemente 10 vorgesehen, die vorliegend gummielastisch ausgeführt sind und Verkippungen zwischen der mit dem ersten Gehäuseteil 5 fest verbundenen Grundplatte 7 und dem zweiten Gehäuseteil 6 zulassen. Zwischen einem Schraubenkopf 11 eines Schraubenelementes 13 der Verschraubung 9 und dem Dämpfungselement 10 ist eine metallische Scheibe 12 vorgesehen, über welche die Schraubenkraft der Verschraubung 9 über die gesamte Stirnfläche des Dämpfungselementes 10 in dieses eingeleitet wird.

In dem dem Schraubenkopf 11 abgewandten Endbereich ist das Schraubenelement 13 der Verschraubung 9 in ein Gewinde des zweiten Gehäuseteiles 6 eingeschraubt. In einem dem Schraubenkopf 11 zugewandten Bereich der Grundplatte 7 weist die Grundplatte 7 eine Schulter 14 auf, an welcher das Dämpfungselement 10 mit einem zwischen der metallischen Scheibe 12 und der Schulter 14 der Grundplatte 7 angeordneten vergrößerten Durchmesserbereich 15 anliegt.

Darüber hinaus erstreckt sich das Dämpfungselement 10 im Stoßbereich zwischen der Grundplatte 7 und dem zweiten Gehäuseteil 6 mit einem weiteren vergrößerten Durchmesserbereich 16, womit die durch das Einschrauben des Schraubenelementes 13 in das zweite Gehäuseteil 6 erzeugte Schraubenkraft ausgehend vom Schraubenkopf 11 über die metallische Scheibe 12 und dem vergrößerten Durchmesserbereich 15 in die Grundplatte 7 eingeleitet wird und anschließend über den weiteren vergrößerten Durchmesserbereich 16 des Dämpfungselementes 10 wiederum im Bereich des zweiten Gehäuseteiles 6 abgestützt wird.

Die beiden gummielastisch ausgeführten vergrößerten Durchmesserbereiche 15 und 16 des Dämpfungselementes 10 ermöglichen Verkippungen zwischen der Grundplatte 7 und dem zweiten Gehäuseteil 6 und dämpfen eine Übertragung von Schwingungen zwischen dem hydrostatischen Leistungszweig 2 und dem mechanischen Leistungszweig 3.

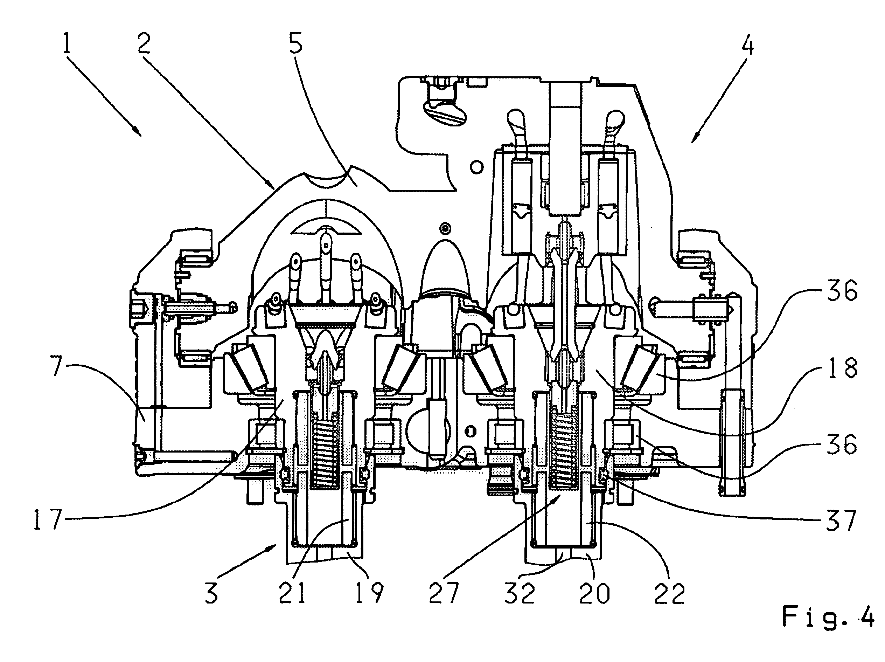

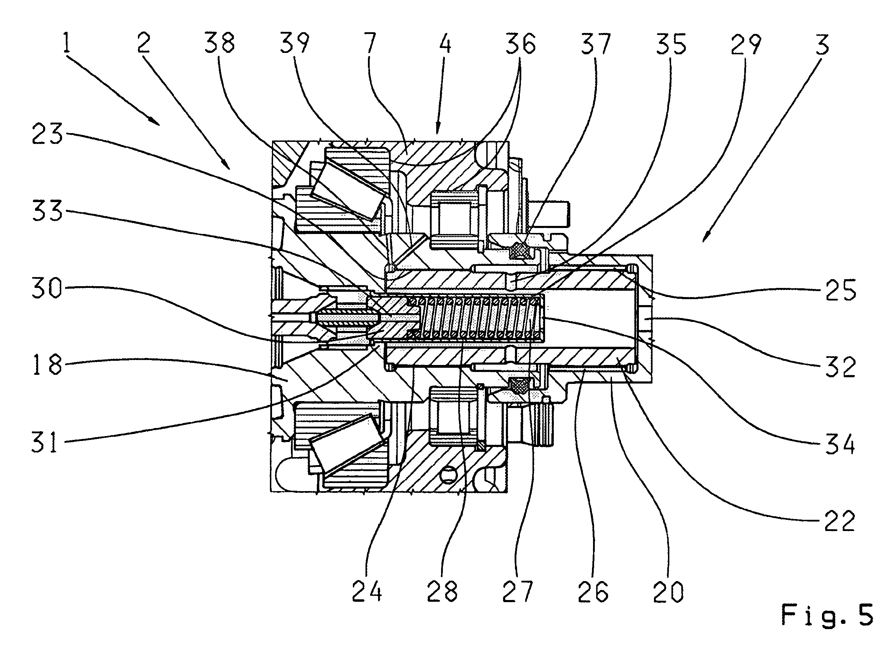

Fig. 4 zeigt eine dreidimensionale Querschnittansicht des in Fig. 2 dargestellten Bereiches des Leistungsverzweigungsgetriebes 1. Darüber hinaus ist in Fig. 5 ein in Fig. 4 näher gekennzeichneter Bereich V in vergrößerter Einzelschnittansicht dargestellt.

Nachfolgend wird anhand der Darstellungen gemäß Fig. 4 und Fig. 5 eine mechanische Verbindung zwischen dem hydrostatischen Leistungszweig 2 und dem mechanischen Leistungszweig 3 näher beschrieben, über welche der Leistungsfluss zwischen den beiden Leistungszweigen 2 und 3 geführt wird und in deren Bereich Achsversätze sowie Verkippungen zwischen dem hydrostatischen Leistungszweig 2 und dem mechanischen Leistungszweig 3 bei geringem axialen Bauraumbedarf des Leistungsverzweigungsgetriebes 1 ausgleichbar sind.

Aufgrund der im Bereich der Verbindungseinrichtung 8 im Betrieb des Leistungsverzweigungsgetriebes 1 möglichen Verkippungen zwischen der Grundplatte 7 und dem zweiten Gehäuseteil 6, in welchem der mechanische Leistungszweig 3 des Leistungsverzweigungsgetriebes 1 angeordnet ist, sind Hydrostatwellen 17, 18 des hydrostatischen Leistungszweiges 2 und Wellen 19, 20 des mechanischen Leistungszweiges 3 über Verbindungswellen 21, 22 verbunden.

Im Bereich der Verbindungswellen 21, 22 sind Achsversätze und Verkippungen zwischen den Hydrostatwellen 17 und 18 des hydrostatischen Leistungszweiges und den damit drehfest verbundenen Wellen 19, 20 des mechanischen Leistungszweiges 3 in einem die Funktionsweise des Leistungsverzweigungsgetriebe gewährleistenden Umfang in der nachbeschriebenen Art und Weise ausgleichbar.

Der Aufbau der mechanischen Verbindungen zwischen den Hydrostatwellen 17 und 18 des hydrostatischen Leistungszweiges 2 und den Wellen 19 und 20 des mechanischen Leistungszweiges 3 ist im Wesentlichen identisch, weshalb der konstruktive Aufbau sowie die daraus resultierende Funktionsweise der Verbindungen nachfolgend im Wesentlichen anhand der in Fig. 5 gezeigten Verbindung zwischen der Hydrostatwelle 18 und der Welle 20 näher erläutert wird.

Die Verbindungswelle 22 greift mit einem ersten Zahnprofil 23 in ein Zahnprofil 24 der Hydrostatwelle 18 ein. Zusätzlich ist die Verbindungswelle 22 über ein zweites Zahnprofil 25 mit einem Zahnprofil 26 der Welle 20 des mechanischen Leistungszweiges 3 wirkverbunden. Die Zahnprofile 23 und 25 der Verbindungswelle 22 sind als Bogenaußenverzahnungen ausgebildet, die jeweils in die als Innenverzahnungen ausgeführten Zahnprofile 24 bzw. 26 der Hydrostatwelle 18 und der Welle 20 eingreifen.

Aufgrund der Ausführung der Zahnprofile 23 und 25 der Verbindungswelle 22 als Bogenaußenverzahnungen sind Verkippungen zwischen dem hydrostatischen Leistungszweig 2 und dem mechanischen Leistungszweig 3 bzw. zwischen den Hydrostatwellen 17 und 18 und den Wellen 19 und 20 mit den jeweils eine geringe axiale Länge aufweisenden Verbindungswellen 21 und 22 ausgleichbar.

Zusätzlich ist die Verbindungswelle 22 als Hohlwelle ausgebildet, in der zumindest teilweise eine die Hydrostatwelle 18 federnd gegen das erste Gehäuseteil 5 vorspannende Federeinrichtung 27 angeordnet ist. Die Federeinrichtung 27 umfasst eine Federhülse 28 und ein darin angeordnetes Federelement 29, welches von der Federhülse 28 geführt wird. Das Federelement 29 ist einenends an der Federhülse 28 und anderenends an einem in der Federhülse 28 längsbeweglich angeordneten Kolbenelement 30 angeschultert. In Einbaulage ist die Federhülse 28 über das Federelement 29 gegen einen Bund 31 der Hydrostatwelle 18 gedrückt, während das Kolbenelement 30 über das Federelement 29 gegen das erste Gehäuseteil 5 des Leistungsverzweigungsgetriebe 1 gedrückt ist.

Eine Schmierölversorgung des in Fig. 5 dargestellten Bereiches des Leistungsverzweigungsgetriebes 1 erfolgt vorliegend ausgehend vom mechanischen Leistungszweig 3 über eine zentrale Schmierölbohrung 32 der Welle 20. Um einen Schmierölfluss ausgehend von der Schmierölbohrung 32 in das Innere der Hydrostatwelle 18 zu gewährleisten, sind sowohl das Kolbenelement 30 als auch die Federhülse 28 jeweils mit einer Durchgangsbohrung 33 bzw. 34 ausgebildet. Die Lagereinrichtung 36 der Hydrostatwelle 18 wird über in der Hydrostatwelle 18 angeordnete Schmierölbohrungen 38, 39 mit Schmieröl versorgt.

Zur Verbesserung einer Zirkulation von Schmieröl durch die Verzahnungen zwischen der Verbindungswelle 22 und der Hydrostatwelle 18 sowie der Welle 20 ist die Verbindungswelle 22 zwischen den Zahnprofilen 23 und 25 der Verbindungswelle 22 mit radialen Ölbohrungen 35 ausgeführt. Bauliche Abmessungen des Leistungsverzweigungsgetriebes 1 sind in axialer Erstreckung der Hydrostatwelle 18 und der Welle 20 im Vergleich zu bekannten Leistungsverzweigungsgetrieben auch kleiner, weil die Verbindungswelle 22 radial innerhalb einer Lagereinrichtung 36 der Hydrostatwelle 18 angeordnet ist.

Um das Leistungsverzweigungsgetriebe 1 in axialer Richtung mit einem gewünschten geringen Bauraumbedarf ausführen zu können, ist die Dichteinrichtung 37 zusätzlich in einem radialen Überlappungsbereich zwischen der Welle 20 und der Hydrostatwelle 18 vorgesehen. Zudem ist zur Gewährleistung der Schmierölversorgung des in Fig. 5 dargestellten Bereiches des Leistungsverzweigungsgetriebes 1 zwischen der Hydrostatwelle 18 des hydrostatischen Leistungszweiges 2 und der Welle des mechanischen Leistungszweiges 3 eine Dichteinrichtung 37 angeordnet, die zum Ausgleich der bei Achsversätzen und Verkippungen zwischen der Hydrostatwelle 18 und der Welle 20 über den Umfang der Hydrostatwelle 18 variierenden Spaltmaße vorliegend als Elastomerdichtung ausgeführt ist.

Das vorbeschriebene Leistungsverzweigungsgetriebe 1 stellt eine bauraumgünstige Ausführung dar, bei welcher eine Schwingungsabkopplung durch Gummidämpfer im Bereich zwischen der Grundplatte 7 und dem zweiten Gehäuseteil 6 verwirklicht wird. Die aus der Schwingungsabkopplung resultierenden Radialversätze bzw. Verkippungen zwischen den Hydrostatwellen 17 und 18 und den Wellen 19 und 20 des mechanischen Leistungszweiges 3 werden durch die mit Bogenverzahnungen ausgebildeten Verbindungswellen 21 und 22 ausgeglichen, womit eine einwandfreie Übertragung eines zwischen dem hydrostatischen Leistungszweiges 2 und des mechanischen Leistungszweiges 3 zu führenden Drehmomentes bei gleichzeitig geringem axialem Bauraumbedarf gewährleistet ist.

### Bezugszeichen

- 1: Leistungsverzweigungsgetriebe
- 2: hydraulischer Leistungszweig
- 3: mechanischer Leistungszweig
- 4: Getriebegehäuse
- 5: erstes Gehäuseteil
- 6: zweites Gehäuseteil
- 7: Grundplatte
- 8: Verbindungseinrichtung
- 9: Verschraubung
- 10: Dämpfungselement
- 11: Schraubenkopf
- 12: metallische Scheibe
- 13: Schraubenelement
- 14: Schulter der Grundplatte
- 15, 16: vergrößerter Durchmesserbereich des Dämpfungselementes
- 17, 18: Hydrostatwelle
- 19, 20: Welle
- 21, 22: Verbindungswelle
- 23: Zahnprofil der Verbindungswelle
- 24: Zahnprofil der Hydrostatwelle
- 25: zweites Zahnprofil der Verbindungswelle
- 26: Zahnprofil der Welle
- 27: Federeinrichtung
- 28: Federhülse
- 29: Federelement
- 30: Kolbenelement
- 31: Bund der Hydrostatwelle
- 32: zentrale Schmierölbohrung
- 33: Durchgangsbohrung des Kolbenelementes
- 34: Durchgangsbohrung der Federhülse
- 35: Ölbohrung
- 36: Lagereinrichtung der Hydrostatwelle
- 37: Dichteinrichtung
- 38, 39: Schmierölbohrung

## Patentansprüche

1. Leistungsverzweigungsgetriebe (1) mit einem hydrostatischen Leistungszweig (2) und einem mechanischen Leistungszweig (3), die über eine Verbindungseinrichtung (8) verbunden sind, wobei die Verbindungseinrichtung (8) eine Übertragung von Schwingungen zwischen dem hydrostatischen Leistungszweig (2) und dem mechanischen Leistungszweig (3) zumindest teilweise dämpft und der Leistungsfluss zwischen dem hydrostatischen Leistungszweig (2) und dem mechanischen Leistungszweig (3) jeweils über eine einen Achsversatz zwischen einer Hydrostatwelle (18, 19) des hydrostatischen Leistungszweiges (2) und einer Welle (20, 21) des mechanischen Leistungszweiges (3) ausgleichende Verbindungswelle (22) führbar ist, die mit einem ersten Zahnprofil (23) in ein Zahnprofil (24) der Hydrostatwelle (18) eingreift und über ein zweites Zahnprofil (25) mit einem Zahnprofil (26) der Welle (20) des mechanischen Leistungszweiges (3) wirkverbunden ist, **dadurch gekennzeichnet, dass** die Verbindungswelle (21, 22) als Hohlwelle ausgebildet ist und in der Verbindungswelle (21, 22) zumindest teilweise eine die Hydrostatwelle (17, 18) federnd vorspannende Federeinrichtung (27) angeordnet ist und die Zahnprofile (23, 25) der Verbindungswelle (22) als Bogenaußenverzahnungen ausgebildet sind, die jeweils in die als Innenverzahnungen ausgeführten Zahnprofile (24 und 26) der Hydrostatwelle (18) des hydrostatischen Leistungszweiges (2) und der Welle (20) des mechanischen Leistungszweiges (3) eingreifen.

2. Leistungsverzweigungsgetriebe nach Anspruch 1, **dadurch gekennzeichnet, dass** die Verbindungswelle (21, 22) wenigstens bereichsweise radial innerhalb einer Lagereinrichtung (36) der Hydrostatwelle (18) angeordnet ist.

3. Leistungsverzweigungsgetriebe nach Anspruch 1 oder 2, **dadurch gekennzeichnet, dass** zwischen der Hydrostatwelle (18) und der Welle (20) des mechanischen Leistungszweiges (3) eine Dichteinrichtung (37) angeordnet ist.

4. Leistungsverzweigungsgetriebe nach Anspruch 3, **dadurch gekennzeichnet, dass** die Dichteinrichtung (37) als eine Elastomerdichtung ausgeführt ist.

5. Leistungsverzweigungsgetriebe nach Anspruch 3 oder 4, **dadurch gekennzeichnet, dass** sich die Hydrostatwelle (18) und die Welle (20) des mechanischen Leistungszweiges (3) bereichsweise überlappen und die Dichteinrichtung (37) im Überlappungsbereich angeordnet ist.

6. Leistungsverzweigungsgetriebe nach einem der Ansprüche 1 bis 5, **dadurch gekennzeichnet, dass** Federeinrichtung (27) eine Federhülse (28) und zumindest ein darin angeordnetes Federelement (29) umfasst, wobei das Federelement (29) einenends an der Federhülse (28) und anderenends an einem in der Federhülse (28) längsbeweglich angeordneten Kolbenelement (30) angeschultert ist.

7. Leistungsverzweigungsgetriebe nach Anspruch 6, **dadurch gekennzeichnet, dass** die Federhülse (28) in Einbaulage über das Federelement (29) gegen einen Bund (31) der Hydrostatwelle (18) gedrückt ist.

8. Leistungsverzweigungsgetriebe nach Anspruch 6 oder 7, **dadurch gekennzeichnet, dass** das Kolbenelement (30) über das Federelement (29) gegen ein Gehäuseteil (5) des hydrostatischen Leistungszweiges (2) gedrückt ist.

9. Leistungsverzweigungsgetriebe nach einem der Ansprüche 6 bis 8, **dadurch gekennzeichnet, dass** das Kolbenelement (30) mit einer Durchgangsbohrung (33) ausgeführt ist.

10. Leistungsverzweigungsgetriebe nach einem der Ansprüche 6 bis 9, **dadurch gekennzeichnet, dass** die Federhülse (28) mit einer Durchgangsbohrung (34) ausgebildet ist.

11. Leistungsverzweigungsgetriebe nach einem der Ansprüche 1 bis 10, **dadurch gekennzeichnet, dass** die Verbindungswelle (22) zwischen den Zahnprofilen (23, 25) zumindest eine radiale Ölbohrung (35) aufweist.

12. Leistungsverzweigungsgetriebe nach einem der Ansprüche 8 bis 11, **dadurch gekennzeichnet, dass** ein Getriebegehäuse (4) mehrteilig ausgebildet ist und der hydrostatische Leistungszweig (2) in dem ersten Gehäuseteil (5) und der mechanische Leistungszweig (3) in einem zweiten Gehäuseteil (6) angeordnet sind.

13. Leistungsverzweigungsgetriebe nach Anspruch 12, **dadurch gekennzeichnet, dass** zwischen den Gehäuseteilen (5, 6) eine dem hydrostatischen Leistungszweig (2) zugeordnete Grundplatte (7) vorgesehen ist.

14. Leistungsverzweigungsgetriebe nach Anspruch 13, **dadurch gekennzeichnet, dass** das erste Gehäuseteil (5) und die Grundplatte (7) über Verschraubungen (9) der Verbindungseinrichtung (8) miteinander koppelbar sind, wobei im Bereich der Verschraubungen (9) sich zwischen das erste Gehäuseteil (5) und die Grundplatte (7) erstreckende Dämpfungselemente (10) vorgesehen sind.

## Claims

1. Power split gearbox (1) having a hydrostatic power branch (2) and a mechanical power branch (3) which are connected by means of a connecting device (8), wherein the connecting device (8) at least partially dampens a transmission of vibrations between the hydrostatic power branch (2) and the mechanical power branch (3), and the power flow between the hydrostatic power branch (2) and the mechanical power branch (3) can be conducted in each case via a connecting shaft (22) which compensates an axis offset between a hydrostatic shaft (18, 19) of the hydrostatic power branch (2) and a shaft (20, 21) of the mechanical power branch (3) and which engages with a first tooth profile (23) into a tooth profile (24) of the hydrostatic shaft (18) and which is operatively connected by means of a second tooth profile (25) to a tooth profile (26) of the shaft (20) of the mechanical power branch (3), **characterized in that** the connecting shaft (21, 22) is designed as a hollow shaft, and a spring device (27) which resiliently preloads the hydrostatic shaft (17, 18) is at least partially arranged in the connecting shaft (21, 22), and the tooth profiles (23, 25) of the connecting shaft (22) are formed as external spiral toothings which engage in each case into the tooth profiles (24 and 26), formed as internal toothings, on the hydrostatic shaft (18) of the hydrostatic power branch (2) and on the shaft (20) of the mechanical power branch (3).

2. Power split gearbox according to Claim 1, **characterized in that** the connecting shaft (21, 22) is arranged, at least in regions, radially within a bearing device (36) of the hydrostatic shaft (18).

3. Power split gearbox according to Claim 1 or 2, **characterized in that** a sealing device (37) is arranged between the hydrostatic shaft (18) and the shaft (20) of the mechanical power branch (3).

4. Power split gearbox according to Claim 3, **characterized in that** the sealing device (37) is formed as an elastomer seal.

5. Power split gearbox according to Claim 3 or 4, **characterized in that** the hydrostatic shaft (18) and the shaft (20) of the mechanical power branch (3) overlap regionally, and the sealing device (37) is arranged in the region of overlap.

6. Power split gearbox according to one of Claims 1 to 5, **characterized in that** the spring device (27) comprises a spring sleeve (28) and at least one spring element (29) arranged therein, wherein the spring element (29) is supported at one end on the spring sleeve (28) and at the other end on a piston element (30) arranged in a longitudinally movable manner in the spring sleeve (28).

7. Power split gearbox according to Claim 6, **characterized in that** the spring sleeve (28), in the installed position, is pushed over the spring element (29) against a collar (31) of the hydrostatic shaft (18).

8. Power split gearbox according to Claim 6 or 7, **characterized in that** the piston element (30) is pushed by means of the spring element (29) against a housing part (5) of the hydrostatic power branch (2).

9. Power split gearbox according to one of Claims 6 to 8, **characterized in that** the piston element (30) is formed with a passage bore (33).

10. Power split gearbox according to one of Claims 6 to 9, **characterized in that** the spring sleeve (28) is formed with a passage bore (34).

11. Power split gearbox according to one of Claims 1 to 10, **characterized in that** the connecting shaft (22) has at least one radial oil bore (35) between the tooth profiles (23, 25).

12. Power split gearbox according to one of Claims 8 to 11, **characterized in that** a gearbox housing (4) is of multi-part design and the hydrostatic power branch (2) is arranged in the first housing part (5) and the mechanical power branch (3) is arranged in a second housing part (6).

13. Power split gearbox according to Claim 12, **characterized in that** a base plate (7) which is assigned to the hydrostatic power branch (2) is provided between the housing parts (5, 6).

14. Power split gearbox according to Claim 13, **characterized in that** the first housing part (5) and the base plate (7) can be coupled to one another by means of screw connections (9) of the connecting device (8), wherein damping elements (10) which extend between the first housing part (5) and the base plate (7) are provided in the region of the screw connections (9).

## Revendications

1. Transmission à répartition de puissance (1) comprenant une branche de puissance hydrostatique (2) et une branche de puissance mécanique (3), qui sont connectées par le biais d'un dispositif de liaison (8), le dispositif de liaison (8) amortissant au moins partiellement un transfert des vibrations entre la branche de puissance hydrostatique (2) et la branche de puissance mécanique (3), et le flux de puissance entre la branche de puissance hydrostatique (2) et la branche de puissance mécanique (3) pouvant être guidé à chaque fois par le biais d'un arbre de liaison (22) compensant un décalage axial entre un arbre hydrostatique (18, 19) de la branche de puissance hydrostatique (2) et un arbre (20, 21) de la branche de puissance mécanique (3), lequel arbre de liaison vient en prise avec un premier profilé denté (23) dans un profilé denté (24) de l'arbre hydrostatique (18) et étant en liaison fonctionnelle par le biais d'un deuxième profilé denté (25) avec un profilé denté (26) de l'arbre (20) de la branche de puissance mécanique (3), **caractérisée en ce que** l'arbre de liaison (21, 22) est réalisé sous forme d'arbre creux et un dispositif de ressort (27) exerçant une précontrainte de ressort sur l'arbre hydrostatique (17, 18) est disposé au moins en partie dans l'arbre de liaison (21, 22) et les profilés dentés (23, 25) de l'arbre de liaison (22) sont réalisés sous forme de dentures extérieures courbes, qui viennent en prise à chaque fois dans les profilés dentés (24 et 26) réalisés sous forme de dentures internes de l'arbre hydrostatique (18) de la branche de puissance hydrostatique (2) et de l'arbre (20) de la branche de puissance mécanique (3).

2. Transmission à répartition de puissance selon la revendication 1, **caractérisée en ce que** l'arbre de liaison (21, 22) est disposé au moins en partie radialement à l'intérieur d'un dispositif de palier (36) de l'arbre hydrostatique (18).

3. Transmission à répartition de puissance selon la revendication 1 ou 2, **caractérisée en ce qu'**un dispositif d'étanchéité (37) est disposé entre l'arbre hydrostatique (18) et l'arbre (20) de la branche de puissance mécanique (3).

4. Transmission à répartition de puissance selon la revendication 3, **caractérisée en ce que** le dispositif d'étanchéité (37) est réalisé sous forme de joint d'étanchéité élastomère.

5. Transmission à répartition de puissance selon la revendication 3 ou 4, **caractérisée en ce que** l'arbre hydrostatique (18) et l'arbre (20) de la branche de puissance mécanique (3) se chevauchent en partie et le dispositif d'étanchéité (37) est disposé dans la région de chevauchement.

6. Transmission à répartition de puissance selon l'une quelconque des revendications 1 à 5, **caractérisée en ce que** le dispositif de ressort (27) comprend un manchon de ressort (28) et au moins un élément de ressort (29) disposé dans celui-ci, l'élément de ressort (29) butant à une extrémité contre le manchon de ressort (28) et à l'autre extrémité contre un élément de piston (30) disposé de manière déplaçable longitudinalement dans le manchon de ressort (28).

7. Transmission à répartition de puissance selon la revendication 6, **caractérisée en ce que** le manchon de ressort (28), dans la position installée, est pressé par l'élément de ressort (29) contre un épaulement (31) de l'arbre hydrostatique (18).

8. Transmission à répartition de puissance selon la revendication 6 ou 7, **caractérisée en ce que** l'élément de piston (30) est pressé par l'élément de ressort (29) contre une partie de boîtier (5) de la branche de puissance hydrostatique (2).

9. Transmission à répartition de puissance selon l'une quelconque des revendications 6 à 8, **caractérisée en ce que** l'élément de piston (30) est réalisé avec un alésage de passage (33).

10. Transmission à répartition de puissance selon l'une quelconque des revendications 6 à 9, **caractérisée en ce que** le manchon de ressort (28) est réalisé avec un alésage traversant (34).

11. Transmission à répartition de puissance selon l'une quelconque des revendications 1 à 10, **caractérisée en ce que** l'arbre de liaison (22) présente entre les profilés dentés (23, 25) au moins un alésage d'huile radial (35).

12. Transmission à répartition de puissance selon l'une quelconque des revendications 8 à 11, **caractérisée en ce qu'**un boîtier de transmission (4) est réalisé en plusieurs parties et la branche de puissance hydrostatique (2) est disposée dans la première partie de boîtier (5) et la branche de puissance mécanique (3) est disposée dans une deuxième partie de boîtier (6).

13. Transmission à répartition de puissance selon la revendication 12, **caractérisée en ce qu'**entre les parties de boîtier (5, 6) est prévue une plaque de base (7) associée à la branche de puissance hydrostatique (2).

14. Transmission à répartition de puissance selon la revendication 13, **caractérisée en ce que** la première partie de boîtier (5) et la plaque de base (7) peuvent être accouplées l'une à l'autre par le biais de vis (9) du dispositif de liaison (8), des éléments d'amortissement (10) s'étendant entre la première partie de boîtier (5) et la plaque de base (7) étant prévus dans la région des vis (9).
